Europäisches Patentamt

(19) European Patent Office

Office européen des brevets

(11) Veröffentlichungsnummer: **0 092 201**
**B1**

(12) **EUROPÄISCHE PATENTSCHRIFT**

(45) Veröffentlichungstag der Patentschrift:
19.03.86

(51) Int. Cl.⁴: **A 01 B 11/00**

(21) Anmeldenummer: 83103674.4

(22) Anmeldetag: 15.04.83

(54) Fahrbares Bodenlockerungsgerät.

(30) Priorität: 16.04.82 DE 3214084
22.06.82 DE 3223268

(43) Veröffentlichungstag der Anmeldung:
26.10.83 Patentblatt 83/43

(45) Bekanntmachung des Hinweises auf die Patenterteilung:
19.03.86 Patentblatt 86/12

(84) Benannte Vertragsstaaten:
AT BE CH FR GB IT LI NL

(56) Entgegenhaltungen:
EP - A - 0 025 568
DE - A - 2 726 468
US - A - 1 400 673
US - A - 4 102 402

(73) Patentinhaber: Wolf-Geräte GmbH, Gregor-Wolf-Strasse
Postfach 860 und 880, D-5240 Betzdorf/Sieg (DE)

(72) Erfinder: Orth, Günter, Kapellenweg 19,
D-5241 Birken/Sief (DE)

(74) Vertreter: Koch, Günther, Dipl.-Ing. et al,
Kaufingerstrasse 8, D-8000 München 2 (DE)

LIBER, STOCKHOLM 1986

## Beschreibung

Die Erfindung bezieht sich auf ein fahrbares Bodenlockerungsgerät mit höhenbeweglich angeordneten Werkzeugen, die vom hinteren Hebelarm einer doppelarmigen in Fahrtrichtung verlaufenden Werkzeugschwinge getragen werden, die um eine quer zur Fahrtrichtung verlaufende gegenüber dem Fahrgestellrahmen in der Höhe über einen Lenker verstellbare Schwingachse durch einen Antrieb in Schwingungsbewegungen versetzbar ist, der am vorderen Hebelarm der Werkzeugschwinge angreift.

Ein derartiges Bodenlockerungsgerät ist aus der US-A-1 400 673 bekannt. Hierbei wird der die Schwingachse verstellende Lenker über einen Winkelhebel von einem Handgriff aus angehoben, der von einer auf der Maschine mitfahrenden Person eingestellt werden kann. Das in Fahrtrichtung vorn liegende Ende jeder Werkzeugschwinge trägt im bekannten Fall ein Lager, welches einen abgekröpften Kurbelteil einer Kurbelwelle erfaßt, die über ein Zahngetriebe von Laufrädern des Gerätes aus angetrieben wird. Hier wird die Höheneinstellung der Tragschwinge und demgemäß das Ausmaß, mit dem die Werkzeuge zwengsläufig in den Boden eingeführt werden, durch die Handhebeleinstellung der Schwingachse bestimmt, wobei diese Einstellung nur manuell geändert werden kann.

Der Erfindung liegt die Aufgabe zugrunde, ein gattungsgemäßes Bodenlockerungsgerät derart zu berbessern, daß bei einfachem Aufbau die Werkzeuge automatisch den wechselnden Verdichtungsgraden des Bodens angepaßt werden und einen einheitlichen Lockerungseffekt bewirken.

Gelöst wird die gestellte Aufgabe durch die im Kennzeichnungsteil des Patentanspruchs 1 angegebenen Merkmale. Ein derartiges Bodenlockerungsgerät eignet sich insbesondere für Böden mit unterschiedlichen Bodenverdichtungen, wie dies beispielsweise auf einem Sportplatz häufig anzutreffen ist, wo stark verhärtete Bereiche mit weicheren, unbespielten Bereichen abwechseln. Auch bei derart extremen Unterschieden der Bodenbeschaffenheit wird durch das erfindungsgemäße Gerät eine optimale Auflockerung aller Bereiche gewährleistet und die Ebenflächigkeit des Platzes bleibt erhalten. Durch die Erfindung wird nämlich erreicht, daß bei steigendem Zugwiderstand infolge dichterer Bodenbeschaffenheit die Schwingungsamplitude um die Gelenkachse kleiner wird oder überhaupt keine Bewegungen mehr stattfinden, so daß die Schwingungsamplitude der Werkzeugschwinge umso größer wird. Umgekehrt wird automatisch eine Stabilisierung der Achsen bei nachlassendem Zugwiderstand in der Weise erfolgen, daß der Hubweg an der Spitze der Lockerungsbewegung im wesentlichen in vertikaler Rächtung verläuft.

Im Gegensatz zum Stande der Technik, wo die Eindringtiefe durch Einstellung von Handhebeln bestimmt wird, kann bei dem erfindungsgemäßen Gerät durch geeignete Bemessungen der Hebelarmlängen, der Exzentrizität und der Anordnung der Achsen ein vollautomatisches Arbeiten gewährleistet werden und es ist von der Maschine her keine Einstellbedienung erforderlich, und es sind auch keine Räder erforderlich, mit denen das Gerät am Boden abgestützt ist.

Gemäß einer Ausgestaltung der Erfindung weist der Antrieb eine Nockenfolgerolle auf, die an einem von der Zapfwelle eines Traktors getriebenen Exzenter abläuft. Um zu gewährleisten, daß auch bei hoher Zapfwellendrehzahl die Folgerolle ständig an dem Exzenter anliegt, und um eine einwandfreie Schwingungsbewegung der Werkzeuge unter allen Arbeitsbedingungen sicherzustellen, ist gemäß einer weiteren Ausgestaltung der Erfindung eine Zwangsführung vorgesehen, die einen ständigen Kontakt zwischen Folgerolle und Exzenter selbst bei einer Nickbewegung der Werkzeugschwinge gewährleistet.

Durch die Erfindung wird es weiter möglich, eine Einstellbarkeit der Schwingungsamplitude derart zu gewährleisten, daß die Amplitude des Exzenters zwischen Null und 40 mm stufenlos eingestellt werden kann, ohne daß Teile ausgewechselt werden müssen.

Durch die Erfindung wird weiter die Möglichkeit geschaffen, die im Maximalhub auftretenden Querkräfte zu eliminieren.

Diese und weitere Vorteile der Erfindung ergeben sich aus den Merkmalen der Unteransprüche.

Nachstehend werden Ausführungsbeispiele der Erfindung anhand der Zeichnung beschrieben. In der Zeichnung zeigen:

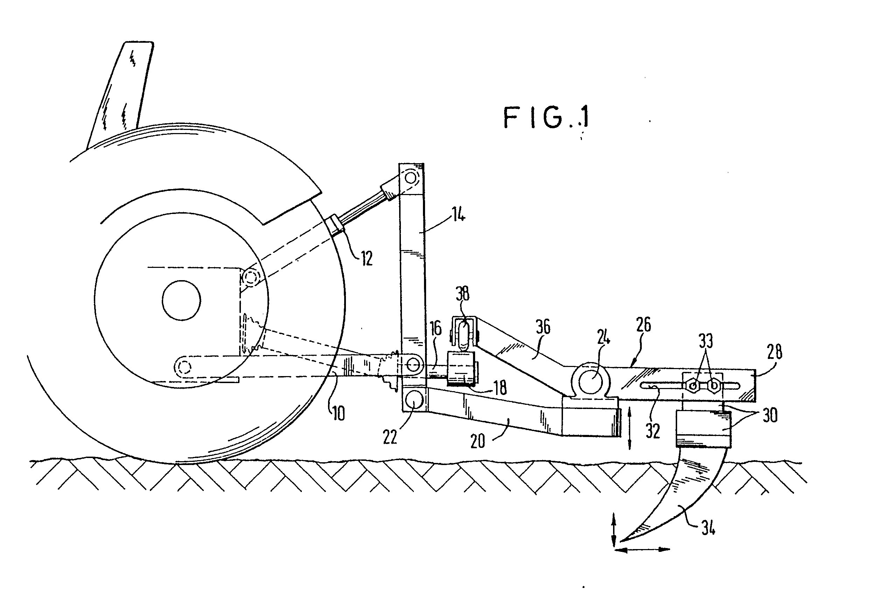

Fig. 1 eine schematische Seitenansicht eines an einem Schlepper angehängten Bodenlockerungsgerätes,

Fig. 2 eine schematische Darstellung des Schwingungsantriebs der Werkzeugschwinge,

Fig. 3 in größerem Maßstab den als Drehtopf ausgebildeten Exzenter mit den an seiner Innenwand ablaufenden Folgerollen,

Fig. 4 eine Ansicht in Richtung des Pfeiles IV gemäß Fig. 3.

Fig. 5 eine Ansicht der von der Zapfwelle des Zugfahrzeugs getragenen scheibenartigen Grundplatte, die den Drehtopf trägt.

An den beiden unteren Streben 10 und der oberen Hubstrebe 12 einer Dreipunktaufhängung eines Schleppers ist der Tragrahmen 14 des Bodenlockerungsgerätes aufgehängt. Die Zapfwelle 16 des Schleppers trägt einen Exzenter 18.

Eine Tragschwinge 20 ist über horizontale Drehzapfen 22 am Rahmen 14 angelenkt. Diese Tragschwinge 20 trägt ein Schwenklager 24, dessen Schwenkachse parallel zur Schwenkachse der Zapfen 22 verläuft. Das Schwenklager 24 trägt eine Werkzeugschwinge 26 in Gestalt eines doppelarmigen Hebels, dessen hinterer Hebelarm 28 einen Werkzeugträgerbalken 30 trägt. Die wirksame Hebelarmlänge ist über einen Schlitz 32 einstellbar, durch den Schraubbolzen 33 geführt sind, mit denen der Träger 30 stufenlos an jeder Stelle fixiert werden kann. Der Werkzeugträgerbaiken 30 trägt in vorbestimmten Abständen nebeneinander die Werkzeuge 34 in Gestalt von mondsichelartigen Messern oder mondsichelartigen Dornen, deren Spitze schräg nach vorn und unten weist.

Der vordere Hebelarm 36 der Werkzeugschwinge 26 trägt eine Rolle 38, die um eine in Längsrichtung verlaufende Achse drehbar ist und auf dem Exzenter 18 abläuft, wodurch die oszillierende Schwingbewegung der Werkzeugschwinge zustande kommt.

Durch die Einstellung des Werkzeugträgerbalkens 30 am Lastarm 28 der Schwinge 26 kann der Hubweg der Lockerungswerkzeuge 34 verändert werden.

Um die Maschine um die in Fahrtrichtung verläufende längsachse torsionssteif zu halten, können nicht dargestellte Verstrebungen angeordnet werden, und insbesondere kann die Tragschwinge 20 und die Werkzeugschwinge 26 mehrere Tragarme aufweisen.

Die Bemessung der Hebelarme und die Anordnung der Drehachsen der Schwenkgelenke 24 und 22 sind so gewählt, daß automatisch die Bearbeitung je nach Bodenbeschaffenheit in optimaler Weise erfolgt. Wenn auf die Werkzeuge eine hohe Zugkraft bei festem Boden ausgeübt wird; dann wirkt das auf die Werkzeugschwinge 26 ausgeübte Drehmoment sowohl auf die Rolle 38 als auch auf das Schwenklager 24, was zur Folge hat, daß dieses sich in einer bestimmten Höhenlage stabilisiert und die Schwingungsamplitude um die Drehzapfen 22 kleiner wird oder überhaupt keine Bewegung mehr stattfindet. Je weniger sich das Schwenklager 24 in der Höhe bewegt, desto größer wird die Schwingungsamplitude des Schwingarmes 26, so daß sich an der Spitze der Lockerungswerkzeuge 34 ein horizontal zur Bodenebene verlaufender Hubweg ergibt.

Wenn der Zugwiderstand nachläßt, wird automatisch das Schwenklager 24 bezüglich seiner Höhenbewegung um die Drehzapfen 22 instabil und es wird dadurch bewirkt, daß die Schwingungsamplitude der Werkzeugschwinge 26 um das Schwenklager 24 kleiner wird oder auf Null zurückgeht, so daß die durch den Exzenter 18 bewirkte Schwingung nunmehr um die Drehzapfen 22 herum erfolgt, während das von Trägerschwinge 20 und Werkzeugschwinge 36 gebildete System starr verbleibt. Hierdurch wandelt sich der Hubweg an der Spitze der Lockerungswerkzeuge 34 von der horizontalen in eine vertikale Richtung.

Diese automatische Anpassung bei sich ändernden Bodenverdichtungen bewirkt eine wechselnde Stoß-und Hubbewegung je nach Zugwiderstand, so daß sich ein vollständig selbsttätiger Betrieb ergibt und die Bedienungsperson keine Steuerbewegungen durchzuführen braucht, nachdem der Werkzeugträger an der richtigen Stelle des Lasthebelarms 28 der Werkzeugschwinge 26 festgelegt ist.

Für Sonderfälle soll es jedoch für die Erfindung auch vorbehalten bleiben, die Möglichkeit zu schaffen, jeweils eines der Schwenklager 22, 24 derart zu verriegeln, daß dann jeweils nur eine Schwenkung um das andere, nicht verriegelte Schwenklager erfolgen kann.

Anstelle einer vollständigen Verriegelung je eines Schwenklagers kann auch ein Bremsmechanismus in die Schwenkläger eingebaut sein, der eine willkürliche Einstellung der Schwingungsamplituden ermöglicht.

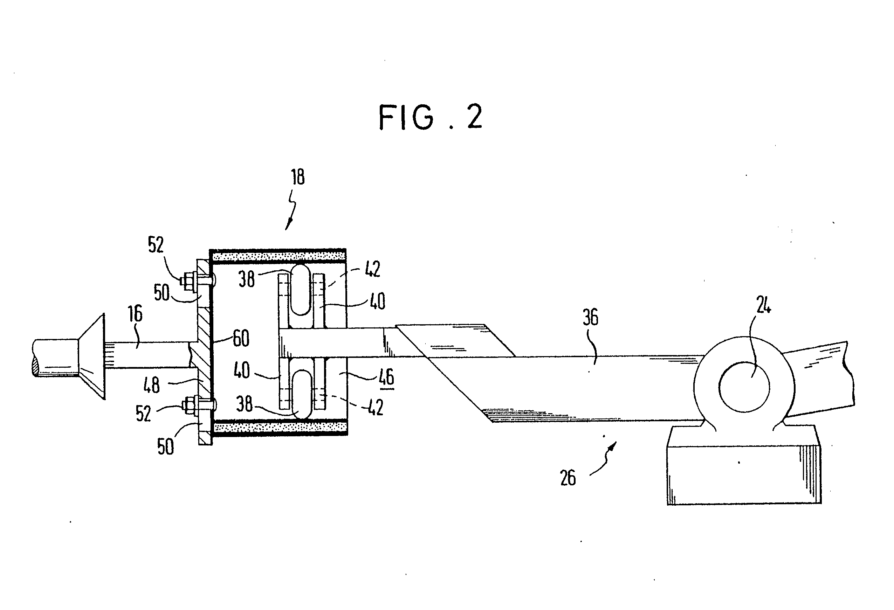

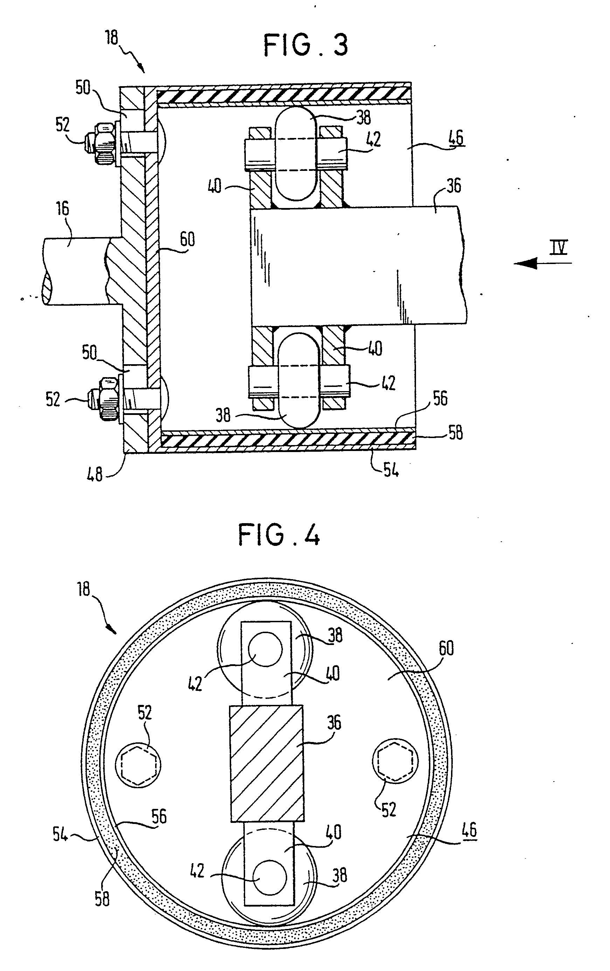

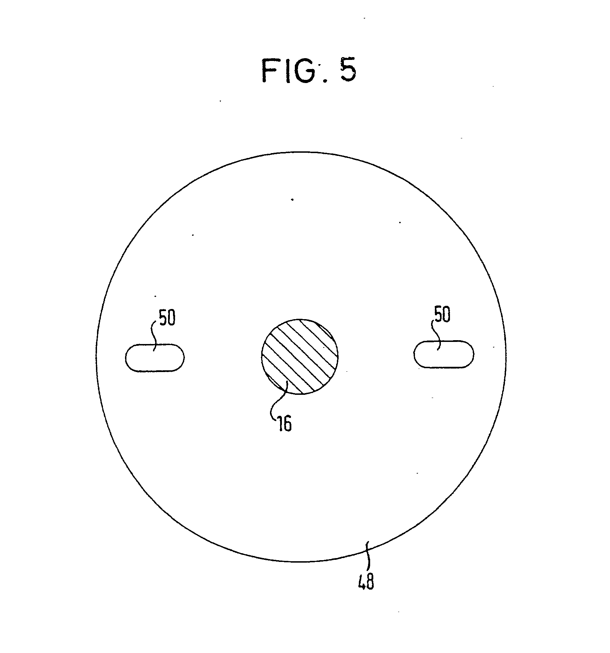

Gemäß Fig. 2 bis 5 trägt der Hebelarm 36 der vom Schwenklager 24 getragenen Werkzeugschwinge 26 eine nach oben und eine nach unten vorstehende Lagergabel 40, die mittels in Längsrichtung verlaufenden Achsen 42 eine obere und eine untere Folgerolle 38 lagern. Der von der Zapfwelle 16 des nicht dargestellten Zugfahrzeuges getragene Exzenter 18 ist als Drehtopf 46 ausgebildet, der mit seiner, Bodenplatte 60 auf einer scheibenförmigen Grundplatte 48 radial verstellbar festgelegt ist. Zu diesem Zweck weist die Grundplatte 48 (Fig. 5) zwei diametral gegenüberliegende in Hadialrichtung verlaufende Langlochschlitze 50 auf, über die der Boden des Drehtopfes 46 mittels Stellschrauben 52 in unterschiedlichen Exzenterstellungen festlegbar ist.

Die Folgerollen 38 liegen oben und unten der Innenwand 56 des Drehtopfes 46 an und laufen auf diesem ab, wobei infolge der diametralen Anordnung eine ständige Rollberührung gewährleistet ist.

Die Innenwand 56 ist als Zylinderring ausgebildet und zwischen dieser Innenwand 56 und der starren Außenwand 54, die mit der Bodenplatte 60 verbunden ist, befindet sich eine Gummischicht 58, deren Aufgabe darin besteht, bei möglichst dichter Anlage der Folgerollen 38 an die Innenwand 56 die Querkräfte aufzufangen. Außerdem werden hierdurch Stoßbelastungen und die auftretenden Geräusche gedämpft.

**Patentansprüche:**

1. Fahrbares Bodenlockerungsgerät mit höhenbeweglich angeordneten Werkzeugen (34), die vom hinteren Hebelarm (28) einer doppelarmigen, in Fahrtrichtung verlaufenden Werkzeugschwinge (26) getragen werden, die um eine quer zur Fahrtrichtung verlaufende, gegenüber dem Fahrgestellrahmen (14) in der Höhe über einen Lenker (20) verstellbare Schwingachse (24) durch einen Antrieb (16, 18, 38) in Schwingungsbewegungen versetzbar ist, der am vorderen Hebelarm (36) der Werkzeugschwinge (26) angreift, dadurch gekennzeichnet, daß das Lager der Schwingachse (24) der Werkzeugschwinge (26) vom hinteren Abschnitt einer den Lenker bildenden, in Fahrtrichtung verlaufenden Tragschwinge (20) getragen ist, deren vorderes Ende um eine quer zur Fahrtrichtung verlaufende horizontale Gelenkachse (22) an einem am Schlepper anhängbaren Rahmen (14) angelenkt ist und daß Werkzeugschwinge (26) und Tragschwinge (20) ohne Räder allein über dis Werkzeuge (34) am Boden abgestützt sind.

2. Bodenlockerungsgerät nach Anspruch 1, dadurch gekennzeichnet, daß der Schwingungsantrieb von einem von der Zapfwelle (16) eines Traktors getriebenen Exzenter (18) gebildet ist, an dem eine Nockenfolgerolle (38) abläuft, die um eine in Fahrtrichtung verlaufende Achse am vorderen Hebelarm (36) der Werkzeugschwinge (26) drehbar ist.

3. Bodenlockerungsgerät nach Anspruch 1, dadurch gekennzeichnet, daß die Werkzeuge als sichelartige Messer (34) ausgebildet sind, die am hinteren Hebelarm der Werkzeugschwinge (26) in Fahrtrichtung einstellbar festlegbar sind.

4. Bodenlockerungsgerät nach Anspruch 3, dadurch gekennzeichnet, daß ein Träger (30) der Werkzeuge mit durch einen in Fahrtrichtung verlaufenden Schlitz (32) des hinteren Hebelarms (28) der Werkzeugschwinge (26) stehende Bolzen (33) an diesem Hebelarm einstellbar festlegbar ist.

5. Bodenlockerungsgerät nach Anspruch 1, dadurch gekennzeichnet, daß die relative Lage der Achsen (22 sowie 24) von Tragschwinge (20) sowie Werkzeugschwinge (26) und die Lage des Schwingungsantriebs derart vorgenommen ist und die Hebelarme derart bemessen sind, daß bei sich erhöhendem Zugwiderstand die Schwingungsamplitude der Tragschwinge (20) um die Gelenkachse (22) verringert wird, während bei sich verringerndem Zugwiderstand die Schwingungsamplitude der Werkzeugschwinge (26) um die Schwingachse (24) verringert wird.

6. Bodenlockerungsgerät nach einem der Ansprüche 1 bis 6, dadurch gekennzeichnet, daß die Achsen (24 bzw. 22) von Werkzeugschwinge (26) bzw. Tragschwinge (20) mit einem Brems- oder Verriegelungsmechanismus versehen sind.

7. Bodenlockerungsgerät nach den Ansprüchen 1 und 2, dadurch gekennzeichnet, daß der Schwingungsantrieb wenigstens zwei Nockenfolgerollen (38) aufweist, die an zwei diametral gegenüberliegenden Stellen der Innenwand des als Drehtopf (46) ausgebildeten Exzenters ablaufen.

8. Bodenlockerungsgerät nach Anspruch 7, dadurch gekennzeichnet, daß die die Nockenfolgerollen (38) tragenden Achsen (42) von Lagergabeln (40) getragen werden, die von dem vorderen Hebelarm der Werkzeugschwinge (26) nach oben bzw. unten vorstehen.

9. Bodenlockerungsgerät nach einem der Ansprüche 1 bis 8, dadurch gekennzeichnet, daß die Exzentrizität des Schwingungsantriebs einstellbar ist.

10. Bodenlockerungsgerät nach Anspruch 9 dadurch gekennzeichnet, daß der mit einer elastischen Wand versehene Drehtopf (46) von einem an der Zapfwelle (16) sitzenden Flansch (48) radial verstellbar getragen wird und daß der kreisrund ausgebildete Flansch (48) radial verlaufende Langlochschlitze (50) aufweist, über die der Drehtopf (46) verstellbar und mittels Stellschrauben (52) in unterschiedlichen Radialstellungen festlegbar ist.

**Claims**

1. Travelling soil loosening apparatus with vertically movably disposed tools (34) which are carried by the rear lever arm (28) of a doublearmed tool rocker (26) which extends in the travelling direction and which is adapted to be set by a drive (16, 18, 38) engaging at the front lever arm (36) of the tool rocker (26) into oscillating movements about an oscillating axis (24) which extends transversely of the travelling direction and is adjustable in height with respect to the chassis frame (14) via a link (20), characterized in that the bearing of the oscillating axis (24) of the tool rocker (26) is carried by the rear portion of a support rocker (20) which forms the link and extends in the travelling direction and the front end of which is connected articulately about a horizontal pivot axis (22) extending transversely of the travelling direction to a frame (14) attachable to the tractor and that the tool rocker (26) and support rocker (20) are supported without wheels solely via the tools (34) on the ground.

2. Soil loosening apparatus according to claim 1, characterized in that the oscillating drive is formed by an eccentric (28) which is driven by the power takeoff shaft (16) of a tractor and on which a cam follower roller (38) runs which is rotatable about an axis extending in the travelling direction at the front lever arm (36) of the tool rocker (26).

3. Soil loosening apparatus according to claim 1, characterized in that the tools are formed as sickle-shaped blades (34) which are securable to the rear lever arm of the tool rocker (26) adjustably in the travelling direction.

4. Soil loosening apparatus according to claim 3, characterized in that a support (30) of the tools is adjustably securable to the rear lever arm (28) with bolts (33) projecting through a slot (32) extending in the travelling direction in said rear lever arm (28) of the tool rocker (26).

5. Soil loosening apparatus according to claim 1, characterized in that the relative position of the axes (22 and 24) of the support rocker (20) and tool rocker (26) and the position of the oscillating drive and the dimensioning of the lever arms are such that with increasing traction resistance the oscillating amplitude of the support rocker (20) about the pivot pin (22) is reduced whilst with decreasing traction resistance the oscillating amplitude of the tool rocker (26) about the pivot pin (24) is reduced.

6. Soil loosening apparatus according to any one of claims 1 to 6, characterized in that the axes (24 and 22) of the tool rocker (26) and support rocker (20) respectively are provided with a braking or locking mechanism.

7. Soil loosening apparatus according to claims 1 and 2, characterized in that the oscillating drive comprises at least two cam follower rollers (38) which run on two diametrically opposite points of the inner wall of the eccentric formed as rotary pot (46).

8. Soil loosening apparatus according to claim 7, characterized in that the shafts (42) carrying the cam follower rollers (38) are carried by bearing forks (40) which project upwardly and downwardly respectively from the front lever arm of the tool rocker (26).

9. Soil loosening apparatus according to any one of claims 1 to 8, characterized in that the eccentricity of the oscillating drive is adjustable.

10. Soil loosening apparatus according to claim 9, characterized in that the rotary pot (46) provided with a resilient wall is carried radially adjustably by a flange (48) mounted on the power takeoff shaft (16) and that the circularly formed flange (48) comprises radially extending elongated slots (50) via which the rotary pot (46) can be secured adjustably by means of setscrews (52) in different radial positions.

## Revendications

1. Appareil mobile à ameublir le sol sur lequel sont disposés des outils (34) mobiles dans le sens de la hauteur, qui sont portés par le bras de levier arrière (28) d'un porte-outils oscillant (26) à bras double, disposé dans le sens de la marche, qui peut se déplacer en mouvements d'oscillation par rapport au cadre du châssis (14), autour d'un axe d'oscillation (24) mobile en hauteur disposé tranversalement par rapport au sens dela marche, par l'intermédiaire d'un bras de guidage (20) et grâce à un entrainement (16,18,38)qui agit sur le bras de levier avant (36)du porte-outils oscillant (26), caractérisé en ce que le palier de l'axe d'oscillation (24) du porte-outils oscillant (26) est porté par la section arrière d'un bras porteur oscillant (26) est porté par la section arrière d'un bras porteur oscillant (20) disposé dans le sens de la marche et constituant le bras de guidage, dont l'extrémité avant est articulée autour d'un axe d'articulation horizontal (22) disposé transversalement par rapport au sens de la marche sur un châssis (14) qui peut être accroché au tracteur et, en ce que le porte-outils oscillant (26)et le bras porteur oscillant (20) sont supportés sur le sol sans utilisation de roues, uniquement par l'intermédiaire des outils(34).

2. Appareil à ameublir le sol suivant la revendication 1, caractérisé en ce que l'entaînement d'oscillation est constitué par un excentrique (18) entraîné par la prise de force (16) d'un tracteur, et sur lequel se déplace un galet suiveur de came (38) qui est mobile autour d'un axe disposé dans le sens de la marche, sur le bras de levier avant (36) du porte-outils oscillant (26).

3. Appareil à ameublir le sol suivant la revendication 1, caractérisé en ce que les outils ont la conformation de couteaux (34) en forme de croissant, qui peuvent être fixés d'une façon réglable au bras de levier arrière du porte-outils oscillant (26), dans le sens de la marche.

4. Appareil à ameublir le sol suivant la revendication 3, caractérisé en ce qu'un support des outils (30) peut être fixé d'une façon réglable au bras de levier arrière, à l'aide de boulons (33) se trouvant dans une fente (32) de ce bras de levier arrière (28) du porte-outils oscillant (26) cette fente étant disposée dans le sens de la marche.

5. Appareil à ameublir le sol suivant la revendication 1, caractérisé en ce que la position relative des axes (22, ainsi que 24) du bras porteur oscillant (20), ainsi que le porte-outils oscillant (26) et la position de l'entraînement d'oscillation sont prévus de telle façon, et les bras de levier sont dimensionnés de telle façon que pour une résistance à l'avancement allant en augmentant, l'amplitude d'oscillation du bras porteur oscillant (20) autour de l'axe d'articulation (22) aille en diminuant, tandis que pour une résistance à l'avancement allant en diminuant, l'amplitude d'oscillation du porte-outils oscillant (26) autour de l'axe d'oscillation (24) aille en diminuant.

6. Appareil à ameublir le sol suivant l'une des revendications 1 à 6, caractérisé en ce que les axes (24, respectivement 22) du porte-outils oscillant (26) respectivement du bras porteur oscillant (20) sont munis d'un mécanisme de freinage ou de verrouillage.

7. Appareil à ameublir le sol suivant les revendications 1 et 2, caractérisé en ce que l'entraîne-ment d'oscillation comporte au moins deux galets suiveurs de came (38) qui se déplacent en deux endroits diamétralement opposés de la paroi intérieure de l'excentrique ayant la conformation d'un pot tournant (46).

8. Appareil à ameublir le sol suivant la revendication 7, caractérisé en ce que les axes (42) qui portent les galets suiveur de came (38) sont portés par des paliers en forme de fourche (40) qui ressortent respectivement vers le haut et vers le bas sur le bras de levier avant du porte-outils oscillant (26).

9. Appareil à ameublir le sol suivant l'une des revendications 1 à 8, caractérisé en ce que l'excentricité de l'entraînement d'oscillation est réglable.

10. Appareil à ameublir le sol suivant la revendication 9, caractérisé en ce que le pot tournant (46) muni d'une paroi élastique est porté par une bride (48) réglable radialement, disposée sur la prise de force (16) et en ce que la bride de conformation circulaire (48) présente une fente longitudinale (50) disposée radialement, grâce à laquelle le pot tournant (46) peut être fixé et réglé dans différentes positions radiales à l'aide de vis de positionnement (52).

FIG.1

# FIG . 2

FIG . 3

FIG . 4

5

# FIG. 5